# EUROPEAN PATENT APPLICATION

(11) **EP 4 799 886 A1**
(43) Date of publication of application: **02.09.2026**
(21) Application number: 24885837.5
(22) Date of filing: 31.10.2024
(51) Int. Cl.: B60W 20/10, B60K 6/28, B60K 6/485, B60W 10/08, B60W 20/00

(54) **LEAN VEHICLE**

(30) Priority: 31.10.2023 WO PCT/JP2023/039210
(71) Applicant: Yamaha Hatsudoki Kabushiki Kaisha, Iwata-shi, Shizuoka 438-8501 (JP)
(72) Inventor: TORIGOSHI, Masaki, Iwata-shi, Shizuoka 438-8501 (JP); HINO, Haruyoshi, Iwata-shi, Shizuoka 438-8501 (JP); TAKAHASHI, Toshihiko, Iwata-shi, Shizuoka 438-8501 (JP); YAMADA, Yuya, Iwata-shi, Shizuoka 438-8501 (JP); TAKASE, Hiroki, Iwata-shi, Shizuoka 438-8501 (JP)
(74) Representative: Stöckeler, Ferdinand
(86) International application number: PCT/JP2024/038914
(87) International publication number: WO 2025/095070

(57) **Abstract**

An objective of the present teaching is to provide a multi-stage transmission-type leaning vehicle that allows for easier assistance control for the pitch posture and transitions of the leaning posture, and thus achieves a reduction in burden on a rider on roads with successive curves or successive uphill and downhill sections. A control unit in this multi-stage transmission-type leaning vehicle executes a capacitor charge/discharge cycle. The capacitor charge/discharge cycle includes (a) acceleration control that is performed via a motor generator using discharge power from a capacitor in a latter half of a curve A so as to assist a transition from a leaning posture to an upright posture using power from an engine, in accordance with input of an acceleration command to an accelerator grip, and (b) regenerative braking control that is performed via the motor generator to charge the capacitor through regenerative braking in a period until a latter half of a curve B so as to recover electric energy in the capacitor that has decreased due to the assistance for the transition from the leaning posture to the upright posture in the latter half of the curve A, in accordance with release of the acceleration command on the accelerator grip.

## Description

### Technical Field

The present teaching relates to a multi-stage transmission-type leaning vehicle.

### Background Art

A motorcycle, for example, is a vehicle where a front wheel and a rear drive wheel are arranged in a straight line in a vehicle traveling direction. The vehicle body thereof leans left and right in order to maintain its state during travel specifically during a turn, the vehicle body of the motorcycle leans toward the center of the turn in order to balance centrifugal force and gravity. This leaning posture is determined according to the turning radius and the vehicle speed. For example, for the same turning radius, a higher vehicle speed requires a larger lean angle, and for the same vehicle speed, a smaller turning radius requires a larger lean angle.

Furthermore, a characteristic motion feature of the motorcycle is changes in posture during a turn. At the start of a turn, the vehicle body needs to transition from an upright posture to a leaning posture. At the end of a turn, the vehicle body needs to transition from the leaning posture back to the upright posture. In the process of these transitions of the leaning posture, the rider's operation and balance are particularly important.

Furthermore, the motorcycle also experiences changes in pitch posture during acceleration and deceleration. During acceleration, inertia causes the front of the vehicle body to rise and the rear of the vehicle body to lower. During deceleration, the front of the vehicle body lowers, and the rear of the vehicle body rises. These changes in pitch posture are also related to movement of the rider's center of gravity and particularly affect the rider's upper body holding the handlebar.

Various hybrid systems have conventionally been proposed to suit such motion features of the motorcycle. For example, Patent Literature (PTL) 1 discloses a hybrid motorcycle including a 48V lithium-ion battery and a drive motor. In this system, the drive motor provides assistance during vehicle start and overtaking, and charges the battery through regenerative power generation by the drive motor during deceleration. Furthermore, in relation to PTL 1, for example, PTL 2 discloses a motorcycle that switches between a normal travel mode and a boost mode, where the drive motor provides assistance in accordance with throttle operation, through the switch operation.

### Citation List

### Patent Literature

PTL 1 Japanese Patent No. 4633843
PTL 2 Japanese Patent Application Laid-Open Publication No. 2024-53958

### Summary of Invention

### Technical Problem

Many motorcycles employ either an automatic transmission or a manual multi-stage transmission, and it is common to adjust the vehicle speed through gear shifting operations and front and rear brake operations. However, on roads with successive curves or successive uphill and downhill sections, these operations are frequently required. In particular, during control for the pitch posture and transitions of the leaning posture, operations are each required to be performed with appropriate timing or with an appropriate operation amount.

In general, a 48V lithium-ion battery in a hybrid system tends to be heavy because a plurality of cells are electrically connected in series and in parallel. However, it is desirable for a motorcycle equipped with a hybrid system to exhibit high maneuverability, particularly high responsiveness, during a turn. Furthermore, it is desirable for the hybrid system to accommodate charge/discharge cycles on roads with successive curves or successive uphill and downhill sections. However, in the case of conventional hybrid systems, the charging rate of the lithium-ion battery is too low to sufficiently absorb electric power generated by regenerative braking, which is concentratedly performed in short periods, such as in a portion of a curve and in a portion of an uphill or downhill section. That is, in the case of conventional hybrid systems, energy generated through electric power generation in a portion of a curve or in a portion of an uphill or downhill section is not sufficiently stored in the lithium-ion battery. As such, if the intaking of electric power generated by regenerative braking and the discharging for assistance, which is performed, in contrast to braking, in a period corresponding to, for example, another portion of the curve are repeated, then the level of charge of the lithium-ion battery gradually decreases over the long term, potentially restricting the execution of assistance.

As described above, in the case of conventional hybrid systems, it has been desired to further prevent issues from occurring where, for example, the maneuverability of the vehicle decreases due to an increase in the weight of the lithium-ion battery or where sufficient assistance is not provided due to a decrease in the level of charge of the lithium-ion battery.

Consequently, it has been desired to prevent an increase in frequency of operation and posture maintenance caused by interspersed situations where gear shifting operations and brake operations are required and where gear shifting operations or brake operations are not required. In particular, appropriate operation amount and timing control are required more on roads with successive curves or successive uphill and downhill sections to compensate for a reduction in vehicle responsiveness. It has therefore been desired to reduce operational burden on the rider on roads with successive curves or successive uphill and downhill sections.

An objective of the present teaching is to provide a multi-stage transmission-type leaning vehicle that allows for easier assistance control for the pitch posture and transitions of the leaning posture, and thus achieves a reduction in burden on a rider particularly on roads with successive curves or successive uphill and downhill sections, by solving the problems described above and achieving a configuration where the leaning vehicle is lightweight and highly responsive.

### Solution to Problem

In order to achieve the objective described above, a vehicle according to an aspect of the present teaching has the following configuration.
(1) A multi-stage transmission-type leaning vehicle including:
   a handlebar having an accelerator grip;
   a front wheel;
   a rear drive wheel;
   a front-wheel brake operating element configured to adjust braking force of a brake for the front wheel;
   a rear-wheel brake operating element configured to adjust braking force of a brake for the rear drive wheel;
   an engine configured to generate power for driving the rear drive wheel;
   a multi-stage transmission provided between the engine and the rear drive wheel;
   a rotary electric machine provided at an end part of a crankshaft of the engine, and configured to perform regenerative power generation by receiving force from the rear drive wheel and provide drive assistance to the rear drive wheel;
   a control unit configured to control the rotary electric machine; and
   a power supply electrically connected to the rotary electric machine, wherein
   the multi-stage transmission-type leaning vehicle is configured to satisfy the following (A) and (B) such that a weight increase of the leaning vehicle is suppressed and the power supply is capable of being charged and being discharged at high current within a short period of time,
   (A) the rotary electric machine is a motor generator provided at the end part of the crankshaft of the engine and is configured as a sole rotary electric machine that performs regenerative power generation by receiving force from the rear drive wheel and that provides drive assistance to the rear drive wheel, and (B) the power supply is configured to include a capacitor without a lithium-ion battery pack where a plurality of cells are electrically connected in series and in parallel, wherein
   the control unit executes is performed; (C) a capacitor charge/discharge cycle for a combination of at least two successive curves A and B during travel on a successive-curve road and for a combination of at least two successive uphill and downhill sections C and D during travel on a successive-uphill-and-downhill road such that the vehicle speed of the leaning vehicle is adjusted, and assistance control is applied to a leaning posture and a pitch posture of the leaning vehicle through the regenerative power generation and the drive assistance by the motor generator, and
   the capacitor charge/discharge cycle includes:
      (a) acceleration control that is performed via the motor generator using discharge power from the capacitor in a latter half of the curve A so as to assist a transition from a leaning posture to an upright posture using the power from the engine, in accordance with input of an acceleration command to the accelerator grip;
      (b) regenerative braking control that is performed via the motor generator to charge the capacitor through regenerative braking in a period until a latter half of the curve B so as to recover electric energy in the capacitor that has decreased due to the assistance for the transition from the leaning posture to the upright posture in the latter half of the curve A, in accordance with release of the acceleration command on the accelerator grip;
      (c) acceleration control that is performed via the motor generator using discharge power from the capacitor in the uphill section C so as to supplement the power from the engine, in accordance with input of an acceleration command to the accelerator grip; and
      (d) regenerative braking control that is performed via the motor generator to charge the capacitor through regenerative braking in the downhill section D so as to recover electric energy in the capacitor that has decreased due to the acceleration control in the uphill section C while reducing changes in pitch posture, in accordance with release of the acceleration command on the accelerator grip.

According to (1), the multi-stage transmission-type leaning vehicle includes a motor generator provided at an end part of a crankshaft. The motor generator is configured as a sole rotary electric machine that performs regenerative power generation and provides drive assistance. The power supply has a configuration that does include a capacitor but a lithium-ion battery pack is not included. This configuration prevents an increase in the weight of the leaning vehicle as compared with a leaning vehicle such as disclosed in the background art, which includes a drive motor that drives the drive wheel separately from a motor generator and a lithium-ion battery pack as a power supply. Furthermore, the use of the capacitor enables high-current charging and discharging in a short period of time. Furthermore, disposing the motor generator on an output shaft of the engine facilitates coordinated control using both the power from the engine and the drive assistance by the motor generator.

It should be noted that the capacitor has a smaller energy capacity than the lithium-ion battery, and thus there is a limit to how long the capacitor can be used for drive assistance. However, the configuration described in (1) achieves a reduction in the required amount of energy by achieving a reduction in the weight of the vehicle, offsetting the aforementioned disadvantage to some extent. Furthermore, since this configuration targets situations requiring short-term drive assistance, such as roads with successive curves or successive uphill and downhill sections, the limited energy capacity of the capacitor does not pose a significant problem.

In this configuration, the control unit executes the capacitor charge/discharge cycle in accordance with input of an acceleration command and release of the acceleration command received from the accelerator grip. The capacitor charge/discharge cycle includes the regenerative braking control through regenerative power generation by the motor generator and the acceleration control for drive assistance. In particular, the control unit can adjust the vehicle speed of the leaning vehicle by controlling the engine and controlling the motor generator, effectively provide assistance for transitions of the leaning posture, and reduce changes in pitch posture as compared with, for example, changes in pitch posture due to braking through the brake for the front wheel, even when neither adjustment of the front-wheel brake operating element and the rear-wheel brake operating element nor adjustment of the vehicle speed through gear shifting of the multi-stage transmission is performed.

Working of this configuration is as follows. On a successive-curve road where a curve B follows a curve A, the transition from the leaning posture of the leaning vehicle to the upright posture can be promoted by adding the drive assistance by the motor generator to the power from the engine during acceleration in the latter half of the curve A. Electric energy for the next curve can also be recovered by executing regenerative power generation between the curve A and the curve B. On a successive-uphill-and-downhill road, drive assistance using electric energy can be provided in the uphill section C, and electric energy can be recovered through regenerative power generation while changes in pitch posture are reduced in the downhill section D. Drive assistance using the recovered electric energy can be provided in the uphill section C.

Because of the above-described working, the following effects are produced. Regarding the maneuverability of the leaning vehicle, first, with the above-described configuration, higher responsiveness can be achieved through the weight reduction, timely drive assistance and regenerative power generation can be achieved through rapid charging and discharging of the capacitor, and smoother posture changes of the leaning vehicle can be achieved. As a result, regarding operational burden on the rider, dependence on operation of the front-wheel brake operating element and the rear-wheel brake operating element, and on gear shifting of the multi-stage transmission, can be reduced because the vehicle speed can be adjusted through the control using the motor generator and the capacitor. The operation frequency during transitions of the leaning posture is reduced, and improved riding comfort is obtained through assistance control applied to the pitch posture.

Effects to be produced in each of specific travel scenes are as follows. On the successive curves, operation is facilitated through drive assistance for the transition from the leaning posture of the leaning vehicle to the upright posture in the latter half of the curve A, and efficient regenerative power generation and reuse of electric energy between the curves are achieved. On the successive-uphill-and-downhill road, high drivability is achieved through drive assistance in the uphill section C, and a reduction in changes in pitch posture of the leaning vehicle and regenerative power generation are achieved in the downhill section D.

In particular, adjustment of the vehicle speed, which depends on gear shifting operations and brake operations in conventional multi-stage transmission-type leaning vehicles, can be achieved through regenerative power generation and drive assistance by the motor generator. As a result, the frequency of gear shifting operations or brake operations, which are likely to cause changes in pitch posture of the leaning vehicle due to, for example, a speed change in a short period of time or front shock absorber compression, is reduced. Thus, the rider can perform gear shifting operations and brake operations less frequently on roads with successive curves or successive uphill and downhill sections, and operational burden on the rider can be further reduced.

Furthermore, with the reduced weight of the vehicle body and the highly responsive charge/discharge characteristics of the capacitor, smooth and fine assistance control for the pitch posture of the leaning vehicle and transitions of the leaning posture is enabled. Thus, changes in the leaning posture and the pitch posture of the leaning vehicle can be effectively assisted, and operational burden on the rider can be effectively reduced particularly on roads with successive curves or successive uphill and downhill sections.

It should be noted that the description in (1) distinguishes the control corresponding to the two curves from the control corresponding to the uphill and downhill sections. However, real-world roads include situations with only curves, situations with only uphill and downhill sections, and situations that combine both curves and uphill and downhill sections. In the capacitor charge/discharge cycle described in (1), the control for the two curves and the control for the uphill and downhill sections may be performed independently for each location where the vehicle is traveling. In the capacitor charge/discharge cycle described in (1), the control for the two curves and the control for the uphill and downhill sections may be performed at the same time if a location where the vehicle is traveling includes both curves and uphill and downhill sections. In this case, operational burden on the rider can be reduced, for example, even in situations where the rider bears greater operational burden, such as when navigating a curve while running uphill or navigating a curve while running downhill.

According to an aspect of the present teaching, the leaning vehicle may adopt the following configuration.

(2) The leaning vehicle described in (1), wherein the power supply provides discharge power to the motor generator at a voltage higher than a voltage that is provided to an auxiliary machine of the engine.

According to (2), the power supply provides electric power to the motor generator at a voltage higher than a voltage that is supplied to an auxiliary machine of the engine. Effects of this configuration are as follows.

Since electric power is provided to the motor generator at a high voltage, the current required to obtain the same output can be reduced. When the current is reduced, the thickness of electrical wiring and connectors can be reduced, and the overall weight of the vehicle is reduced. When the current is reduced, the size and the weight of the motor generator can also be reduced, resulting in satisfactory maneuverability of the vehicle.

With the high voltage, higher output characteristics of the motor generator are obtained, and efficient drive assistance and regenerative power generation over a wider rotation speed range become possible. As a result, assistance control for the pitch posture and transitions of the leaning posture on roads with successive curves or successive uphill and downhill sections becomes easier.

With the configuration described in (2), by supplying electric power to the motor generator at a high voltage, a number of effects are produced, such as a reduction in the weight of the system, expansion of the control range, and an increase in power efficiency. With these effects, satisfactory maneuverability of the leaning vehicle is obtained and operational burden on the rider can be reduced. In particular, with the above-described configuration, smoother assistance control for the pitch posture and transitions of the leaning posture on roads with successive curves or successive uphill and downhill sections is enabled.

According to an aspect of the present teaching, the leaning vehicle may adopt the following configuration.

(3) The multi-stage transmission-type leaning vehicle described in (1) or (2), wherein the control unit executes d-axis control when causing the motor generator to assist with discharge power from the capacitor.

According to (3), the control unit executes d-axis control when causing the motor generator to assist using electric power from the capacitor. Effects of this configuration are as follows.

First, the capacitor has high output density and high-speed charge/discharge characteristics, and can supply a high current instantaneously. With this configuration, electric power supply to the motor generator is quick, fluctuations are reduced, and high responsiveness is achieved.

By combining the d-axis control, the current of the motor generator can be quickly adjusted, and high-speed torque response becomes possible. Specifically, with the d-axis control, torque and magnetic flux can be independently controlled, and necessary torque can be generated instantly. As a result, higher vehicle responsiveness is achieved during acceleration and during transitions of the leaning posture.

Furthermore, with higher control accuracy, higher accuracy of assistance and control for the behavior of the vehicle is achieved. With this configuration, more accurate assistance control for the pitch posture and transitions of the leaning posture is enabled, and operational burden on the rider can be reduced.

Furthermore, with a synergistic effect of the capacitor and the d-axis control produce, higher efficiency of the motor generator is obtained, the necessary size of the motor generator can be reduced, whereby a reduction in the overall weight of the system is achieved.

As described above, with the configuration described in (3), both high current supply from the capacitor and high-accuracy torque control via the d-axis control are achieved, and high responsiveness and high control accuracy of the vehicle are obtained at the same time. With this configuration, therefore, the assistance control for the pitch posture and transitions of the leaning posture is facilitated, operational burden on the rider can be further reduced even on roads with successive curves or successive uphill and downhill sections.

According to an aspect of the present teaching, the leaning vehicle may adopt the following configuration.

(4) The multi-stage transmission-type leaning vehicle described in any one of (1) to (3), wherein the motor generator is configured to perform regenerative power generation and provide drive assistance at least in a low rotation speed zone among the following four rotation speed zones obtained by equally dividing a rotation speed range of the engine: a low rotation speed zone, a low-medium rotation speed zone, a medium-high rotation speed zone, and a high rotation speed zone.

According to (4), the motor generator is configured to perform regenerative power generation and provide drive assistance at least in a low rotation speed zone among the following four rotation speed zones obtained by equally dividing a rotation speed range of the engine: the low rotation speed zone, a low-medium rotation speed zone, a medium-high rotation speed zone, and a high rotation speed zone.

First, on roads with successive curves or successive uphill and downhill sections, the vehicle speed is kept low and shows smaller fluctuations. In this driving condition, the rider tends to avoid driving in a high rotation zone where engine torque fluctuations in response to manipulation of the accelerator grip are relatively large and keep the operation of the engine in the low rotation speed zone as much as possible.

In the low rotation speed zone of the engine, output torque tends to be relatively low, and the rider may feel that it is preferable to have higher engine output during acceleration or during transitions of the leaning posture. According to this configuration, the motor generator provides drive assistance in the low rotation speed zone to supplement the output from the engine, whereby smooth acceleration and transitions of the leaning posture are achieved.

Furthermore, the drive assistance and the regenerative power generation by the motor generator are electrically controlled. As such, the controllability thereof is higher as compared with control of the engine. The motor generator is highly responsive, and increases and decreases in the torque thereof can be adjusted with high accuracy, whereby the accuracy of assistance and control of the behavior of the vehicle can be further improved.

Furthermore, the control is easier in the low rotation speed zone, because the engine output is low, and the torque contribution ratio of the drive assistance by the motor generator is relatively high. Consequently, the response to accelerator operation becomes smoother, and the assistance control for the pitch posture and transitions of the leaning posture becomes easier.

During deceleration in the low rotation speed zone, the motor generator can perform regenerative power generation, and electric energy can thus be stored in the capacitor. Thus, electric power required for drive assistance in the next acceleration or uphill section can be efficiently maintained.

Furthermore, by limiting the operating zone of the motor generator to the low rotation speed zone, the size and the weight of the motor generator can be reduced, and a reduction in the weight of the vehicle is achieved. As a result, higher maneuverability of the vehicle is obtained, and an improvement in power efficiency is also achieved.

According to an aspect of the present teaching, the leaning vehicle may adopt the following configuration.

(5) The multi-stage transmission-type leaning vehicle described in any one of (1) to (4), wherein the power supply provides, to the motor generator, (i) discharge power from the capacitor electrically connected in series with a battery that provides electric power to an auxiliary machine of the engine; or (ii) discharge power from the capacitor configured not to receive discharge power from the battery that provides electric power to an auxiliary machine of the engine.

According to the configuration described in (5), the power supply provides, to the motor generator, one of the following as discharge power:
(i) Discharge power from the capacitor electrically connected in series with a battery that provides electric power to the auxiliary machine of the engine.
(ii) Discharge power from the capacitor configured not to receive electric power from the battery that provides electric power to the auxiliary machine of the engine.

With this configuration, first, an increased number of options are available for the configuration of the power supply, whereby a higher level of vehicle design freedom is obtained. Specifically, whether to connect the capacitor in series with the battery or to dispose the capacitor independently from the battery can be selected, whereby optimal space efficiency and weight distribution of the vehicle can be achieved.

Furthermore, the combination of the battery for the auxiliary machine of the engine and the capacitor can be flexibly set in power supply system design. The voltage level and the current capacity can therefore be optimized, and the performance of the motor generator can be maximized.

Furthermore, with the configuration where the capacitor does not receive electric power from the battery, the charge/discharge cycle of the capacitor can be dedicated to the drive assistance and the regenerative power generation by the motor generator. With this configuration, therefore, electric power from the capacitor can be efficiently used, and high power efficiency can be obtained.

In contrast, with the configuration where the capacitor is connected in series with the battery, the overall voltage can be increased, and an increase in efficiency of electric power supply to the motor generator is achieved. With this configuration, the overall weight of the system is expected to be reduced and the space efficiency is expected to be improved while the performance of the motor generator is enhanced.

As described above, with the configuration described in (5), a higher level of design freedom for the power supply and space is obtained, and an effect of optimizing the overall performance and efficiency of the vehicle is produced. As a result, satisfactory maneuverability of the leaning vehicle is obtained and operational burden on the rider can be reduced.

In particular, with the flexible power supply system design, optimal weight balance and space allocation for the vehicle can be achieved, and the assistance control for the pitch posture and transitions of the leaning posture becomes easier even on roads with successive curves or successive uphill and downhill sections.

According to an aspect of the present teaching, the leaning vehicle may adopt the following configuration.

(6) The multi-stage transmission-type leaning vehicle described in any one of (1) to (4), wherein (iii) the motor generator is configured to perform regenerative power generation and provide drive assistance in a rotation speed zone that is less than or equal to half of a full rotation speed range of the engine, or (iv) the motor generator has a variable-L mechanism that allows inductance L of the motor generator to be variable.

According to (6), the motor generator has one of the following configurations.
(iii) The motor generator is configured to perform regenerative power generation and provide drive assistance in a rotation speed zone that is less than or equal to half of a full rotation speed range of the engine.
(iv) The motor generator has a variable-L mechanism that allows inductance L of the motor generator to be variable.

Effects of this configuration are as follows.
(iii) Effects of the configuration where the motor generator operates in the zone that is less than or equal to half of the rotation speed range of the engine:
   First, by limiting the operating zone of the motor generator to less than or equal to half of the rotation speed range of the engine, the design of the motor generator can be optimized. Since the motor generator does not need to operate in a high rotation speed zone, the size and the weight of the motor generator can be reduced, and a reduction in the weight of the vehicle is achieved. As a result, high maneuverability of the vehicle is obtained, and responsiveness during a turn or during transitions of the leaning posture is improved.
   By limiting the operating zone, control of the motor generator also becomes easier, and the complexity of the control unit can be reduced. As a result, enhanced overall reliability of the system is obtained and cost reduction is also obtained. Moreover, since the motor generator does not operate in the high rotation speed zone, issues of wear and heat generation resulting from high-speed rotation are reduced, and higher durability for the motor generator and related components is obtained.
(iv) Effects of the configuration having the variable-L mechanism:
   By allowing the inductance *L* to be variable, the characteristics of the motor generator can be optimized according to driving conditions. Specifically, high torque can be achieved by increasing the inductance in the rotation speed zone, and higher efficiency can be achieved by decreasing the inductance in the high rotation speed zone. As a result, the performance of the motor generator is optimized over a wide rotation speed range, and the applicable range is expanded. Additionally, by allowing the inductance to be variable, upsizing can be prevented and the light weight can be maintained without increasing the size and the weight of the motor generator.

Furthermore, by optimizing the inductance, higher efficiency of the motor generator is obtained, and electric power loss can be reduced. As a result, electric power from the capacitor can be effectively used, and power efficiency is improved. Furthermore, by adjusting the inductance, torque to be outputted from the motor generator can be controlled with high accuracy, and the accuracy of assistance and control of the behavior of the vehicle can be improved. As a result, smoother assistance control for the pitch posture and transitions of the leaning posture is achieved, and operational burden on the rider can be reduced.

### Effects common to (iii) and (iv):

As described above, with the configuration described in (6), where the operating zone is limited or the inductance is variable, the weight of the motor generator is reduced, and satisfactory maneuverability of the vehicle is obtained. By allowing the inductance to be variable, the performance can be optimized, and effective drive assistance and regenerative power generation over a wide rotation speed range become possible, whereby expansion of the applicable range is achieved. Furthermore, high efficiency of the motor generator is obtained, and electric power from the capacitor can be used without waste. Thus, high power efficiency can be expected.

Additionally, by limiting the operating zone and adjusting the inductance, the control becomes easier, and reliability of the system is enhanced. As a result, fine assistance and control of the behavior of the vehicle become possible, smoother assistance control for the pitch posture and transitions of the leaning posture can be executed, and operational burden on the rider can be reduced. In particular, these effects are more prominent on roads with successive curves or successive uphill and downhill sections.

The terminology used herein is for defining particular embodiments only and is not intended to be limiting the teaching. The term "and/or" used herein includes any and all combinations of one or more of the associated listed items. The terms "including", "comprising", or "having", and variations thereof used herein specify the presence of stated features, steps, operations, elements, components, and/or equivalents thereof, and can include one or more of steps, operations, elements, components, and/or their groups. As used herein, the terms "attached", "connected", "coupled", and/or equivalents thereof are used in a broad sense, and include both of direct and indirect attachment, connection, and coupling. In addition, the terms "connected" and "coupled" are not restricted to physical or mechanical connection or coupling, and can include direct or indirect electrical connection or coupling. Unless otherwise defined, all terms (including technical and scientific terms) used herein have the same meaning as commonly understood by one of ordinary skill in the art to which the present teaching belongs. Terms, such as those defined in commonly used dictionaries, should be interpreted as having a meaning that is consistent with their meaning in the context of the present disclosure and relevant art and should not be interpreted in an idealized or overly formal sense unless expressly so defined herein. It will be understood that the description of the present teaching discloses a number of techniques and steps. Each of these has individual benefit and each can also be used in conjunction with one or more, or in some cases all, of the other disclosed techniques. Accordingly, for the sake of clarity, this description will refrain from repeating every possible combination of the individual steps in an unnecessary fashion. Nevertheless, the description and claims should be read with the understanding that such combinations are entirely within the scope of the present teaching and the claims.

This description describes a novel leaning vehicle. In the description given below, for the purposes of explanation, a number of specific details are set forth in order to provide a thorough understanding of the present teaching. It will be apparent, however, that those skilled in the art may practice the present teaching without these specific details. The present disclosure is to be considered as an exemplification of the present teaching, and is not intended to limit the present teaching to the specific embodiments illustrated by drawings or descriptions below.

The leaning vehicle refers to a straddled vehicle of a type including a saddle on which a rider sits astride. The leaning vehicle refers to a vehicle that makes a turn in a leaning posture. During a turn, the leaning vehicle leans toward the center of the turn. The leaning vehicle is, for example, a motorcycle or a motor tricycle. Examples of leaning vehicles include scooters, mopeds, offroad motorcycles, and on-road motorcycles. The straddled vehicle is not limited to motorcycles, and may be, for example, three-wheeled or four-wheeled buggies, which are referred to as ATVs (All Terrain Vehicles), and snowmobiles.

The multi-stage transmission-type leaning vehicle refers to a leaning vehicle having a multi-stage transmission.

The front-wheel brake operating element is, for example, a brake lever. The rear-wheel brake operating element is, for example, a brake pedal. However, the rear-wheel brake operating element is not particularly limited and may be a lever.

The input of an acceleration command to the accelerator grip means, for example, applying operating force to the accelerator grip to rotate the accelerator grip. The release of the acceleration command on the accelerator grip means, for example, releasing the operating force applied to the accelerator grip to allow the rotated accelerator grip to return.

The engine is an internal combustion engine. The engine is, for example, a single-cylinder engine or an engine having a plurality of cylinders. The engine is, for example, a four-stroke engine or a two-stroke engine.

The rotary electric machine is, for example, a motor generator. The motor generator is a rotary electric machine that combines a motor function and a generator function. The motor generator is, for example, a permanent magnet motor generator that generates a magnetic field using permanent magnets.

The motor generator is, for example, of outer-rotor type. However, the motor generator is not particularly limited and may be, for example, of inner-rotor type. Furthermore, the permanent magnet motor generator may be, for example, of radial-gap type or axial-gap type.

The functions of the rotary electric machine and the motor generator are not limited to the motor function and the generator function. The rotary electric machine and the motor generator may have, for example, a starter function for starting the engine.

The control unit includes, for example, a processor that executes programs and memory that stores the programs and data. The control unit is, for example, implemented through the processor executing a program stored in the memory. However, no particular limitations are placed on the structure of the control unit. For example, the control unit may be a logic circuit that processes data without relying on a processor or a program.

The control unit may additionally include, for example, a function for controlling the engine. However, the control unit is not particularly limited and may be, for example, separate from another control unit for controlling the engine.

The capacitor charge/discharge cycle may be switchable between being executed and not being executed. For example, the capacitor charge/discharge cycle is selectable between being executed and not being executed through manual operation by the rider of the leaning vehicle. Selecting the capacitor charge/discharge cycle between being executed and not being executed is, for example, turning a capacitor charge/discharge cycle mode selection switch on or off. Alternatively, the capacitor charge/discharge cycle may be automatically switched between being executed and not being executed by the control unit. For example, the automatic switching by the control unit may be, for example, linked to current position data and map data, and performed based on terrain (road shape), such as a winding road.

The d-axis control refers to controlling the current in a winding so that a d-axis current component that weakens the field produced by magnetic poles of the motor generator flows through the winding. However, no particular limitations are placed on the control method as long as the current component that weakens the field flows through the winding as a result of the control.

The two successive curves A and B refer to, for example, two curves that occur in sequence during travel among a plurality of curves included in a winding road. The two successive curves A and B may be, for example, connected to each other with a straight section between the curves A and B. The two successive uphill and downhill sections C and D may also be connected to each other with a straight section between the uphill and downhill sections C and D.

### Advantageous Effects of Invention

According to the present teaching, a multi-stage transmission-type leaning vehicle can be provided in which assistance control for the pitch posture and transitions of the leaning posture is facilitated, and burden on a rider is reduced particularly on roads with successive curves or successive uphill and downhill sections, by achieving a configuration where the leaning vehicle is lightweight and highly responsive.

### Brief Description of Drawings

[FIG. 1] A diagram illustrating a leaning vehicle according to a first embodiment.
[FIG. 2] A flowchart for explaining capacitor charge/discharge cycle control that is executed by a control unit.
[FIG. 3] A block diagram showing a configuration according to a second embodiment.
[FIG. 4] A vector diagram showing the relationship between voltages of a motor generator according to a third embodiment.
[FIG. 5] A graph for explaining control according to a fourth embodiment.
[FIG. 6] A block diagram showing a power supply configuration according to a fifth embodiment.
[FIG. 7] A diagram illustrating operation and configuration according to a sixth embodiment.

### Description of Embodiments

The following describes leaning vehicles according to some embodiments with reference to the drawings. It should be noted that the embodiments described below are merely examples. The present teaching should never be construed in a limited way based on the embodiments described below.

### [First Embodiment]

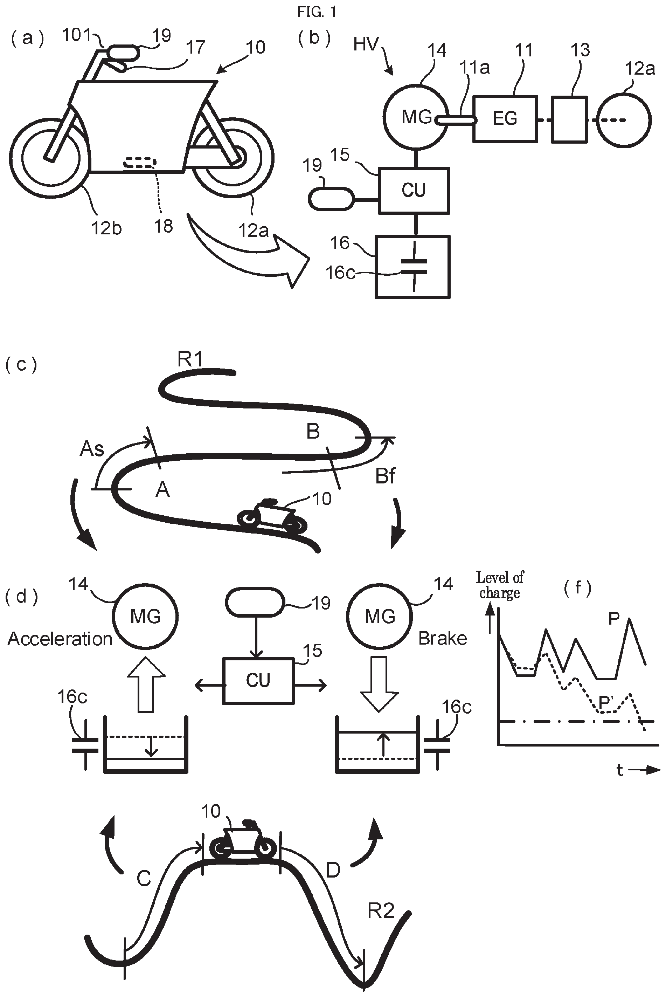

FIG. 1 is a diagram illustrating a leaning vehicle according to a first embodiment. Part (a) of FIG. 1 is a schematic side view of the leaning vehicle. Part (b) of FIG. 1 is a block diagram showing an outline configuration of a hybrid system for the leaning vehicle. Part (c) of FIG. 1 is a conceptual diagram showing a combination of two successive curves. Part (d) of FIG. 1 is a diagram illustrating acceleration control and regenerative braking control. Part (e) of FIG. 1 is a conceptual diagram showing a combination of successive uphill and downhill sections.

A leaning vehicle 10 shown in FIG. 1 includes a handlebar 101, a front wheel 12b, a rear drive wheel 12a, a front-wheel brake operating element 17, a rear-wheel brake operating element 18, an engine 11, a multi-stage transmission 13, a rotary electric machine 14, a control unit 15, and a power supply 16.

An accelerator grip 19 is provided on the handlebar 101.

The rear drive wheel 12a provides driving force for travel of the leaning vehicle 10. The rear drive wheel 12a is also referred to simply as the drive wheel 12a.

The front-wheel brake operating element 17 adjusts braking force of a brake for the front wheel 12b. The front-wheel brake operating element 17 is, for example, provided on the handlebar 101 of the leaning vehicle 10. The front-wheel brake operating element 17 includes, for example, a lever that is operated by a hand of a rider of the leaning vehicle 10.

The rear-wheel brake operating element 18 adjusts braking force of a brake for the rear drive wheel 12a. The rear-wheel brake operating element 18 includes, for example, a pedal that is operated by a foot of the rider of the leaning vehicle 10.

The engine 11 generates power for driving the drive wheel 12a. The engine 11 is an internal combustion engine. The engine 11 generates power through combustion of a gas mixture containing air and fuel. The engine 11 has a crankshaft 11a. The engine 11 outputs power as rotation of the crankshaft 11a.

At least a portion of the power outputted from the engine 11 is transmitted to the drive wheel 12a as mechanical power.

The multi-stage transmission 13 is provided between the engine 11 and the drive wheel 12a. The multi-stage transmission 13 has a plurality of gear stages and neutral that are selectable. With a transmission gear ratio corresponding to the selected gear stage, the multi-stage transmission 13 changes the speed of the rotation to be outputted from the engine 11 and transmits the rotation to the drive wheel 12a. Thus, the multi-stage transmission 13 adjusts driving force through gear shifting.

The rotary electric machine 14 is provided at an end part of the crankshaft 11a of the engine 11. The rotary electric machine 14 performs regenerative power generation by receiving force from the drive wheel 12a. The rotary electric machine 14 also provides drive assistance to the drive wheel 12a. The rotary electric machine 14 receives electric power provided from an external source and applies torque in the rotational direction of the crankshaft 11a of the engine 11 in combustion operation. In this way, the rotary electric machine 14 provides drive assistance to the drive wheel 12a by being provided with electric power. The rotary electric machine 14 can also generate electric power by receiving force from the engine 11 in combustion operation. The rotary electric machine 14 is, for example, a motor generator. Hereinafter, the rotary electric machine 14 is also referred to as the motor generator 14.

The control unit 15 controls the rotary electric machine 14. The control unit 15 is configured as a computer including a central processing unit (CPU) that executes programs and memory that stores the programs and the results of the execution. The control unit 15 implements control of the rotary electric machine 14 through the central processing unit executing a program.

The power supply 16 is electrically connected to the rotary electric machine 14. More specifically, the power supply 16 is electrically connected to the rotary electric machine 14 with the control unit 15 therebetween. The power supply 16 has an energy-storage function. The power supply 16 transfers electric power to and from the rotary electric machine 14. That is, the power supply 16 provides electric power to the rotary electric machine 14 through discharging. The power supply 16 is also charged by receiving electric power from the rotary electric machine 14.

The leaning vehicle 10 is configured to satisfy the following (A) and (B) such that a weight increase of the leaning vehicle 10 is suppressed and the power supply 16 is capable of being charged and being discharged at high current within a short period of time.
(A) The rotary electric machine 14 is a motor generator provided at an end part of the crankshaft 11a of the engine 11. Furthermore, the rotary electric machine 14 is configured as a sole rotary electric machine that performs regenerative power generation by receiving force from the drive wheel 12a and provides drive assistance to the drive wheel 12a.
(B) The power supply 16 is configured to include a capacitor 16c without a lithium-ion battery pack where a plurality of cells are electrically connected in series and in parallel. More specifically, the power supply 16 includes no lithium-ion battery pack. The power supply 16 includes the capacitor 16c.

The control unit 15 performs control even when neither: adjustment of the braking force through operation of the front-wheel brake operating element 17 and the rear-wheel brake operating element 18, nor adjustment of driving force through gear shifting of the multi-stage transmission 13 is performed; such that the vehicle speed of the leaning vehicle 10 is adjusted, and assistance control is applied to a leaning posture and a pitch posture of the leaning vehicle 10. Specifically, the control unit 15 executes a capacitor charge/discharge cycle so that the vehicle speed of the leaning vehicle 10 is adjusted through regenerative power generation and drive assistance by the motor generator 14, and assistance control is applied to the leaning posture and the pitch posture of the leaning vehicle 10.

More specifically, the control unit 15 executes the capacitor charge/discharge cycle for a combination of at least two successive curves A and B during travel on a successive-curve road. The control unit 15 also executes the capacitor charge/discharge cycle for a combination of at least successive uphill and downhill sections C and D during travel on a successive-uphill-and-downhill road.

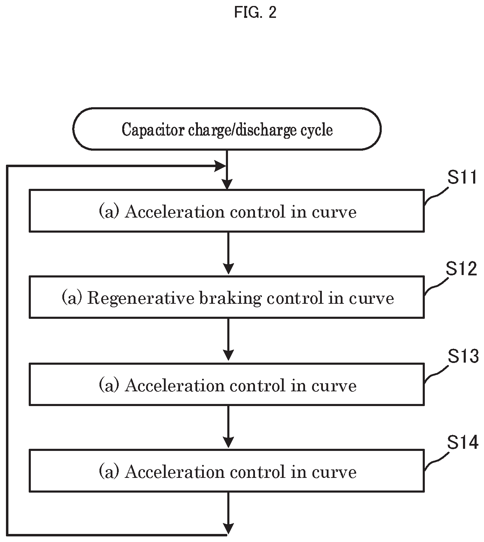

FIG. 2 is a flowchart for explaining capacitor charge/discharge cycle control that is executed by the control unit.

In the capacitor charge/discharge cycle control, as shown in FIG. 2, the control unit 15 executes (a) acceleration control in a curve (S11), (b) regenerative braking control in a curve (S12), (c) acceleration control in uphill and downhill sections (S13), and (d) regenerative braking control in the uphill and downhill sections (S14).

Each control in the capacitor charge/discharge cycle control is executed depending on satisfaction of conditions including input to the accelerator grip 19.

The capacitor charge/discharge cycle control shown in FIG. 2 is, for example, executed upon a rider's control ON operation on a selection switch, not shown. However, another configuration may be adopted where the capacitor charge/discharge cycle control is executed automatically based on current position data of the leaning vehicle 10 and map data. Since the capacitor charge/discharge cycle is switchable between being executed and not being executed, it is possible to stop the control from intervening during, for example, travel on sections other than successive curves or successive uphill and downhill sections.

Part (c) of FIG. 1 shows a successive-curve road R1 on which the leaning vehicle 10 is traveling. The successive-curve road R1 includes a plurality of curves including two successive curves A and B.

Part (e) of FIG. 1 shows a successive-uphill-and-downhill road R2 on which the leaning vehicle 10 is traveling. The successive-uphill-and-downhill road R2 includes a plurality of uphill and downhill sections including successive uphill and downhill sections C and D.

Part (d) of FIG. 1 shows changes in electric power in the case of the acceleration control and in the case of the regenerative braking control. In Part (d), the amount of electric energy stored in the capacitor 16c is depicted by analogy to the amount of liquid stored in a container. The direction of electric power supply between the capacitor 16c and the motor generator 14 is depicted using thick arrows.

With reference also to Part (c) to Part (e) of FIG. 1, the following describes the control (a) to the control (d) to be executed by the control unit 15 in the capacitor charge/discharge cycle control.
(a) The acceleration control in a curve is performed via the motor generator 14 using discharge power from the capacitor 16c in a latter half As of the curve A so as to assist a transition from a leaning posture to an upright posture using the power from the engine 11, in accordance with input of an acceleration command to the accelerator grip 19.
   In the first half of the curve A, the leaning vehicle 10 is operated to assume a leaning posture. In the latter half As of the curve A, the leaning vehicle 10 is operated to transition from the leaning posture to the upright posture. The transition from the leaning posture to the upright posture requires acceleration of the leaning vehicle 10. Through the acceleration control performed via the motor generator 14 using discharge power from the capacitor 16c, the transition from the leaning posture to the upright posture using the power from the engine 11 is assisted. As a result of the acceleration control, the electric energy stored in the capacitor 16c decreases.
(b) The regenerative braking control in a curve is performed via the motor generator 14 to charge the capacitor 16c through regenerative braking in a period Bf until a latter half of the curve B so as to recover electric energy in the capacitor 16c that has decreased due to the assistance for the transition from the leaning posture to the upright posture in the latter half As of the curve A, in accordance with release of the acceleration command on the accelerator grip 19.
   After completing the curve A, the leaning vehicle 10 is operated to transition from the upright posture to the leaning posture in the period Bf until the latter half of the curve B. The transition from the upright posture to the leaning posture requires deceleration of the leaning vehicle 10. Through regenerative braking by the motor generator 14 in accordance with release of the acceleration command on the accelerator grip 19, the leaning vehicle 10 decelerates, and the capacitor 16c is charged. As a result of the regenerative braking control, the electric energy stored in the capacitor 16c increases. The capacitor 16c is charged so as to recover electric energy that has decreased due to the assistance for the transition from the leaning posture to the upright posture in the latter half As of the curve A.
(c) The acceleration control in uphill and downhill sections is performed via the motor generator 14 using discharge power from the capacitor 16c in the uphill section C so as to supplement the power from the engine 11, in accordance with input of an acceleration command to the accelerator grip 19.
   In the uphill section C, the leaning vehicle 10 is operated to accelerate in order to reduce the amount of deceleration due to the uphill section C. Through the acceleration control performed via the motor generator 14 using discharge power from the capacitor 16c, the reduction of deceleration using the power from the engine 11 is assisted. It should be noted that the objective of the acceleration control in the uphill section C is achieved as long as deceleration due to the uphill section C is reduced, even if the leaning vehicle 10 itself does not accelerate. As a result of the acceleration control, the electric energy stored in the capacitor 16c decreases.
(d) The regenerative braking control in uphill and downhill sections is performed via the motor generator 14 to charge the capacitor 16c through regenerative braking in the downhill section D so as to reduce changes in pitch posture, in accordance with release of the acceleration command on the accelerator grip 19.

In the downhill section D, the leaning vehicle 10 is operated to decelerate. Through the regenerative braking by the motor generator 14 in accordance with release of the acceleration command on the accelerator grip 19, the deceleration control using the power from the engine 11 is assisted. It should be noted that the objective of the deceleration control in the downhill section D is achieved as long as acceleration due to the downhill section D is reduced, even if the leaning vehicle 10 itself does not decelerate. Along with the deceleration control, the capacitor 16c is charged. As a result of the regenerative braking control, the electric energy stored in the capacitor 16c increases. The capacitor 16c is charged so as to recover electric energy that has decreased due to the assistance for the acceleration in the uphill section C.

According to the present embodiment, the leaning vehicle 10 including the multi-stage transmission 13 has a configuration where the motor generator 14 is provided at an end part of the crankshaft 11a as the sole rotary electric machine 14 that performs regenerative power generation and provides drive assistance. This configuration includes the capacitor 16c as the power supply 16 but does not include a lithium-ion battery pack. This configuration allows the leaning vehicle 10 to achieve a reduction in weight as compared with a leaning vehicle such as disclosed in PTL 1, which includes a drive motor that drives the drive wheel separately from a motor generator and a lithium-ion battery pack as a power supply. Furthermore, the use of the capacitor 16c enables high-current charging and discharging in a short period of time. Furthermore, disposing the motor generator 14 on an output shaft of the engine 11, that is, on the crankshaft 11a, facilitates coordinated control using both the power from the engine 11 and the drive assistance by the motor generator 14.

Part (f) of FIG. 1 is a graph for explaining an example of the level of charge in the case of travel on a road with successive curves.

P represents the level of charge of the capacitor, and P' represents, as a reference example, the level of charge in the case of a lithium-ion battery. The level of charge increases through charging under the regenerative braking control and decreases through discharging for assistance.

The charging rate of the lithium-ion battery is lower than that of the capacitor. Accordingly, the slope of the increase in charge is gentler in the former case. If charging under the regenerative braking control in a latter half of a curve and discharging under the assistance control in a period until a latter half of the next curve are repeated, therefore, the level of charge P' of the lithium-ion battery gradually decreases over the long term, potentially restricting the execution of assistance.

In contrast, the charging rate of the capacitor 16c of the present embodiment is higher than the lithium-ion battery. Accordingly, the slope of the increase in charge is steeper. Even if charging under the regenerative braking control in a latter half of a curve and discharging under the assistance control in a period until a latter half of the next curve are repeated, therefore, the decrease in the level of charge over the long term is kept small.

It should be noted that the capacitor 16c has a smaller energy capacity than the lithium-ion battery, and thus there is a limit to how long the capacitor 16c can be used for drive assistance. However, the present embodiment achieves a reduction in the required amount of energy by achieving a reduction in the weight of the vehicle, offsetting the aforementioned disadvantage to some extent. Furthermore, since the present embodiment targets situations requiring short-term drive assistance, such as the roads R1 and R2 with successive curves or successive uphill and downhill sections, the limited energy capacity of the capacitor 16c does not pose a significant problem.

In this configuration, the control unit 15 executes the capacitor charge/discharge cycle in accordance with input of an acceleration command and release of the acceleration command received from the accelerator grip 19. The capacitor charge/discharge cycle includes the regenerative braking control through regenerative power generation by the motor generator 14 and the acceleration control for drive assistance. In particular, the control unit 15 adjusts the vehicle speed of the leaning vehicle 10 by controlling the engine 11 and controlling the motor generator 14, and applies assistance control to the leaning posture and the pitch posture, even if neither the front-wheel brake operating element 17 nor the rear-wheel brake operating element 18 is operated, and the vehicle speed is not adjusted through gear shifting of the multi-stage transmission 13.

According to this configuration, it is possible to promote the transition from the leaning posture to the upright posture by adding the drive assistance by the motor generator 14 to the power from the engine 11 during acceleration in the latter half As of the curve A on the successive-curve road R1. It is also possible to recover part or all of the electric energy for the next curve B by executing regenerative power generation between the curve A and the curve B. It is possible to recover electric energy through regenerative power generation and reduce changes in pitch posture in the downhill section D on the successive-uphill-and-downhill road R2. It is possible to provide drive assistance using the recovered electric energy in the uphill section C.

Because of the above-described working, regarding the maneuverability of the leaning vehicle 10, first, with the above-described configuration, higher responsiveness can be achieved through the weight reduction, timely drive assistance and regenerative power generation can be achieved through rapid charging and discharging of the capacitor 16c, and smoother posture changes of the leaning vehicle can be achieved. As a result, regarding operational burden on the rider, dependence on operation of the front-wheel brake operating element 17 and the rear-wheel brake operating element 18, and on gear shifting of the multi-stage transmission 13, can be reduced because the vehicle speed can be adjusted through the control using the motor generator 14 and the capacitor 16c. The operational burden during transitions of the leaning posture is reduced, and improved riding comfort is obtained through the assistance control for the pitch posture.

Effects to be produced in each of specific travel scenes are as follows. On the successive curves A and B, high operability is achieved through drive assistance for the transition from the leaning posture of the leaning vehicle to the upright posture in the latter half of the curve A, and efficient regenerative power generation and reuse of electric power between the curves are achieved. On the successive-uphill-and-downhill road R2, a reduction in changes in pitch posture of the leaning vehicle and regenerative power generation are achieved in the downhill section D, and high drivability through drive assistance in the uphill section C.

In particular, adjustment of the vehicle speed, which depends on gear shifting operations and brake operations in conventional multi-stage transmission-type leaning vehicles, can be achieved through regenerative power generation and drive assistance by the motor generator 14. As a result, the rider can perform gear shifting operations and brake operations less frequently on the roads R1 and R2 with successive curves or successive uphill and downhill sections, and operational burden on the rider can be further reduced.

Furthermore, smooth and fine assistance control for the pitch posture and transitions of the leaning posture is enabled, which is not achieved in conventional leaning vehicles, because of the reduced weight of the vehicle body and the highly responsive charge/discharge characteristics of the capacitor 16c. Thus, changes in the leaning posture and the pitch posture of the leaning vehicle can be effectively assisted, and operational burden on the rider can be effectively reduced particularly on the roads R1 and R2 with successive curves or successive uphill and downhill sections.

### [Second Embodiment]

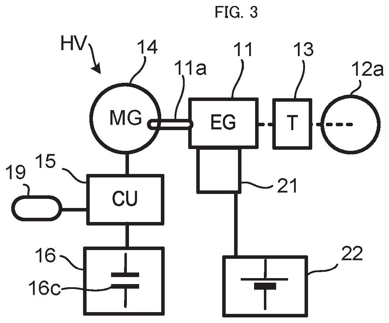

FIG. 3 is a block diagram showing a configuration according to a second embodiment.

A hybrid system HV of a leaning vehicle 10 shown in FIG. 3 includes an auxiliary machine 21 and an auxiliary machine power supply 22. The auxiliary machine 21 is a device for causing an engine 11 to perform combustion operation. The auxiliary machine 21 is electrically driven. The auxiliary machine 21 includes, for example, a fuel supply device and an ignition device. The auxiliary machine power supply 22 provides electric power to the auxiliary machine 21. The auxiliary machine power supply 22 is, for example, a battery.

A power supply 16 provides electric power to a motor generator 14 at a voltage higher than the voltage that is supplied to the auxiliary machine 21.

These are main differences from the first embodiment. The following mainly describes differences from the first embodiment. Elements common to the first embodiment are assigned the same reference signs as in the first embodiment, and description thereof is omitted.

According to the present embodiment, electric power is provided to the motor generator 14 at a high voltage higher than the voltage that is supplied to the auxiliary machine 21, reducing the current required to obtain the same output. Reducing the current makes it possible to reduce the thickness of electrical wiring and connectors, achieving a reduction in the overall weight of the leaning vehicle 10. Reducing the current also makes it possible to reduce the size and the weight of the motor generator 14, resulting in higher maneuverability of the vehicle.

The use of the high voltage allows for higher output characteristics of the motor generator 14, enabling efficient drive assistance and regenerative power generation over a wider rotation speed range. This makes it easier to perform assistance control for the pitch posture and transitions of the leaning posture on the roads R1 and R2 with successive curves or successive uphill and downhill sections.

Since electric power is provided to the motor generator 14 at a high voltage, the configuration of the present embodiment produces a number of effects, such as a reduction in the weight of the hybrid system HV, expansion of the control range, and an increase in power efficiency. These effects result in higher maneuverability of the leaning vehicle 10 and a reduction in operational burden on the rider. In particular, the above-described configuration enables smoother assistance control for the pitch posture and transitions of the leaning posture on the roads R1 and R2 with successive curves or successive uphill and downhill sections.

### [Third Embodiment]

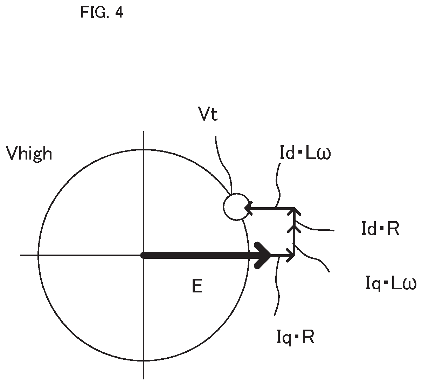

FIG. 4 is a vector diagram showing the relationship between voltages of a motor generator according to a third embodiment.

A control unit 15 in the present embodiment executes d-axis control when a motor generator 14 provides drive assistance using discharge power from a capacitor 16c.

The d-axis control is executed in vector control for the motor generator 14. The d-axis control refers to controlling the current in a winding so that a current component that weakens the field produced by magnetic poles of the motor generator 14 flows through the winding. In the d-axis control, a d-axis current component is controlled out of d-axis and q-axis current components defined with respect to the position of a rotor in the rotating coordinate system of the motor generator 14. The d-axis in the rotating coordinate system extends in a direction along the magnetic poles in the rotor.

These are main differences from the first embodiment. The following mainly describes differences from the first embodiment. Elements common to the first embodiment are assigned the same reference signs as in the first embodiment, and description thereof is omitted.

In the vector diagram in FIG. 4, *Vhigh* indicates the magnitude of the voltage of a power supply 16. *E* indicates induced electromotive force. *Id* indicates the d-axis current component, which is field-weakening current. *Iq* indicates the q-axis current component. The induced electromotive force *E* is suppressed by voltage drops *Iq·R* and *Iq·Lω* due to the q-axis current *Iq* as well as by voltage drops *Id·R* and *Id·Lω* due to the d-axis current *Id*. R represents a resistance component of the winding. *L* represents inductance. *ω* represents angular velocity in terms of electrical angle. The q-axis current *Iq* responds to the torque demand of the motor generator 14 at each moment. Through the d-axis control, a high level of voltage suppression by *Id·Lω* can be achieved with respect to the induced electromotive force *E*.

According to the configuration of the present embodiment, first, the capacitor 16c has high output density and high-speed charge/discharge characteristics, and can supply a high current instantaneously. This configuration enables quick electric power supply to the motor generator 14, reduces fluctuations, and achieves high responsiveness.

By combining the d-axis control, it is possible to quickly adjust the current of the motor generator 14, allowing for high-speed torque response. Specifically, the d-axis control enables independent control of torque and magnetic flux, making it possible to generate necessary torque instantly. As a result, higher vehicle responsiveness is achieved during acceleration and during transitions of the leaning posture.

Furthermore, higher control accuracy is achieved, enabling fine assistance and control for the behavior of the leaning vehicle 10. This configuration enables more accurate assistance control for the pitch posture and transitions of the leaning posture, and achieves a reduction in operational burden on the rider.

Furthermore, the capacitor 16c and the d-axis control produce a synergistic effect, allowing for higher efficiency of the motor generator 14. This configuration therefore achieves a reduction in the necessary size of the motor generator 14, and thus a reduction in the overall weight of the hybrid system HV.

As described above, the configuration of the present embodiment enables both high current supply from the capacitor 16c and high-accuracy torque control via the d-axis control, providing high responsiveness and high control accuracy of the leaning vehicle 10 at the same time. This configuration therefore facilitates the assistance control for the pitch posture and transitions of the leaning posture, and achieves a further reduction in operational burden on the rider even on the roads R1 and R2 with successive curves or successive uphill and downhill sections.

### [Fourth Embodiment]

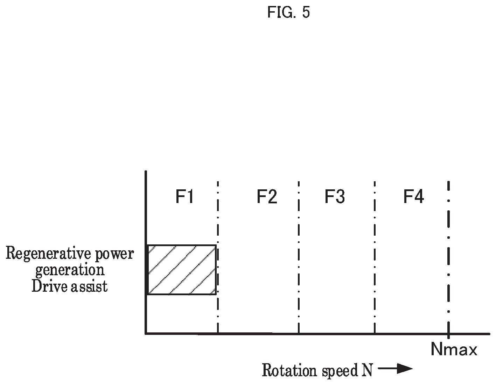

FIG. 5 is a graph for explaining control according to a fourth embodiment.

A motor generator 14 in the present embodiment is configured to perform regenerative power generation and provide drive assistance at least in a low rotation speed zone F1 among the following four rotation speed zones obtained by equally dividing a rotation speed range of the engine 11 up to a maximum rotation speed Nmax: the low rotation speed zone F1, a low-medium rotation speed zone F2, a medium-high rotation speed zone F3, and a high rotation speed zone F4. A control unit 15 in the present embodiment executes regenerative power generation and drive assistance by the motor generator 14 at least in the low rotation speed zone F1.

These are main differences from the first embodiment. The following mainly describes differences from the first embodiment. Elements common to the first embodiment are assigned the same reference signs as in the first embodiment, and description thereof is omitted.

On the roads R1 and R2 with successive curves or successive uphill and downhill sections, the vehicle speed is kept low and shows smaller fluctuations. In this driving condition, the rider tends to avoid excessive engine torque fluctuations in response to manipulation of the accelerator grip 19 and keep the operation of the engine 11 in the low rotation speed zone F1 as much as possible.

In the low rotation speed zone F1 of the engine 11, output torque easily decreases, and the rider may feel a drop in engine output during acceleration or during transitions of the leaning posture.

According to the present embodiment, the motor generator 14 provides drive assistance in the low rotation speed zone F1 to supplement the output from the engine 11, enabling smooth acceleration and transitions of the leaning posture.

Furthermore, the drive assistance and the regenerative power generation by the motor generator 14 are electrically controlled. As such, the controllability thereof is higher compared to control of the engine 11. The motor generator 14 is highly responsive, and increases and decreases in the torque thereof can be adjusted with high accuracy, enabling finer assistance and control of the behavior of the leaning vehicle 10.

Furthermore, the control is easier in the low rotation speed zone F1, because the engine output is low, and the torque contribution ratio of the drive assistance by the motor generator 14 is relatively high. Consequently, the leaning vehicle 10 responds to accelerator operation more smoothly, and the assistance control for the pitch posture and transitions of the leaning posture are easier.

During deceleration in the low rotation speed zone F1, the motor generator 14 can perform regenerative power generation, and thus store electric energy in the capacitor 16c. Thus, electric power required for drive assistance in the next acceleration or uphill section can be efficiently obtained.

Furthermore, limiting the operating zone of the motor generator 14 to the low rotation speed zone F1 allows for a reduction in the size and the weight of the motor generator 14, achieving a reduction in the weight of the leaning vehicle 10. This results in higher maneuverability of the leaning vehicle 10 and contributes to an improvement in power efficiency.

### [Fifth Embodiment]

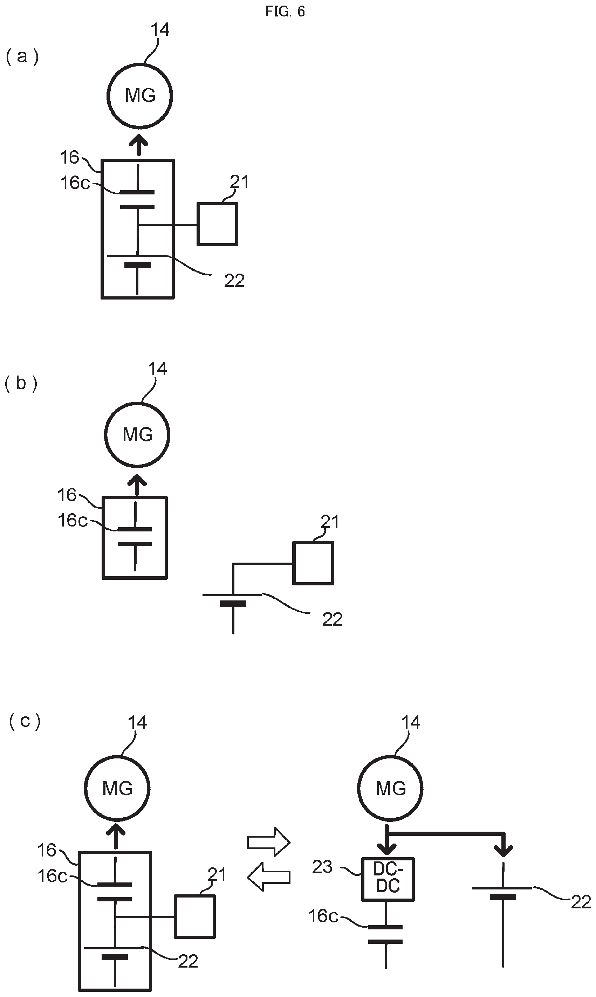

FIG. 6 is a block diagram showing a power supply configuration according to a fifth embodiment.

A power supply 16 in the present embodiment provides the following discharge power (i) or (ii) to a motor generator 14.
(i) Discharge power from a capacitor 16c electrically connected in series with a battery 22 that provides electric power to an auxiliary machine 21 of an engine 11, as shown in Part (a) of FIG. 6.
(ii) Discharge power from the capacitor 16c configured not to receive discharge power from the battery 22 that provides electric power to the auxiliary machine 21 of the engine 11, as shown in Part (b) of FIG. 6.

These are main differences from the first embodiment. The following mainly describes differences from the first embodiment. Elements common to the first embodiment are assigned the same reference signs as in the first embodiment, and description thereof is omitted.

According to the present embodiment, first, an increased number of options are available for the configuration of the power supply 16, allowing for a higher level of vehicle design freedom. Specifically, it is possible to choose whether to connect the capacitor 16c in series with the battery 22 or to dispose the capacitor 16c independently from the battery 22, enabling optimal space efficiency and weight distribution of the leaning vehicle 10.

Furthermore, the combination of the battery 22 for the auxiliary machine of the engine 11 and the capacitor 16c can be flexibly set in power supply system design. It is therefore possible to optimize the voltage level and the current capacity, and to maximize the performance of the motor generator 14.

Furthermore, the configuration where the capacitor 16c does not receive electric power from the battery 22 allows the charge/discharge cycle of the capacitor 16c to be dedicated to the drive assistance and the regenerative power generation by the motor generator 14. This configuration therefore enables efficient use of electric power from the capacitor 16c, achieving an increase in power efficiency.

In contrast, the configuration where the capacitor 16c is connected in series with the battery 22 allows for an increase in the overall voltage of the power supply 16, achieving an increase in efficiency of electric power supply to the motor generator 14. This configuration is expected to reduce the overall weight of the system and improve the space efficiency while enhancing the performance of the motor generator 14.

As described above, the configuration of the present embodiment provides a higher level of design freedom for the power supply 16 and space, and produces an effect of optimizing the overall performance and efficiency of the leaning vehicle 10. This results in higher maneuverability of the leaning vehicle 10 and a reduction in operational burden on the rider.

In particular, the flexible power supply system design allows for optimal weight balance and space allocation for the leaning vehicle 10, so that the assistance control for the pitch posture and transitions of the leaning posture is easier even on the roads R1 and R2 with successive curves or successive uphill and downhill sections.

When the motor generator 14 generates electric power in the configuration of the power supply 16 as described in (i) above where discharge power from the capacitor 16c connected in series with the battery 22 is provided to the motor generator 14, the capacitor 16c connected in series with the battery 22 is charged using the generated electric power. However, the capacitor 16c is not limited to being connected in series during the charging.

For example, discharge power from the capacitor 16c connected in series with the battery 22 is provided to the motor generator 14 as shown in the left diagram in Part (c) of FIG. 6, but when the motor generator 14 generates electric power, the capacitor 16c may be connected in parallel with the battery 22 and charged using the current resulting from the electric power generation by the motor generator 14 as shown in the right diagram in Part (c) of FIG. 6.

The right diagram in Part (c) of FIG. 6 shows, for example, a circuit for the charging where the capacitor 16c is connected in series with a DC-DC converter 23, and the capacitor 16c and the DC-DC converter 23 connected in series are connected in parallel with the battery 22. The capacitor 16c is switched between the parallel connection and the series connection described above by changing the states of the battery 22, the capacitor 16c, and transistor switches, not shown, connected therearound.

During the charging, a portion of the current resulting from the electric power generation by the motor generator 14 is supplied to the battery 22, and another portion is supplied to the capacitor 16c via the DC-DC converter 23. Due to a step-down function of the DC-DC converter 23, the capacitor 16c stores charge at a voltage lower than the voltage of the battery 22. When the capacitor 16c is discharged, discharge power from the capacitor 16c connected in series with the battery 22 is provided to the motor generator 14 as shown in the left diagram in Part (c) of FIG. 6.

During the discharging, a high voltage corresponding to the sum of the voltage of the battery 22 and the voltage of the capacitor 16c is supplied from the power supply 16 to the motor generator 14. That is, a voltage higher than the charging voltage resulting from the electric power generation by the motor generator 14 can be applied to the motor generator 14 during the discharging.

Furthermore, the DC-DC converter 23 may be omitted from the circuit for the charging shown in the right diagram in Part (c) of FIG. 6. In this case, the same voltage is applied to the capacitor 16c and the battery 22 when the motor generator 14 generates electric power. When the capacitor 16c is discharged, a voltage equal to twice the voltage of the battery 22 can be applied to the motor generator 14 from the capacitor 16c connected in series with the battery 22 as shown in the right diagram in Part (c) of FIG. 6.

### [Sixth Embodiment]

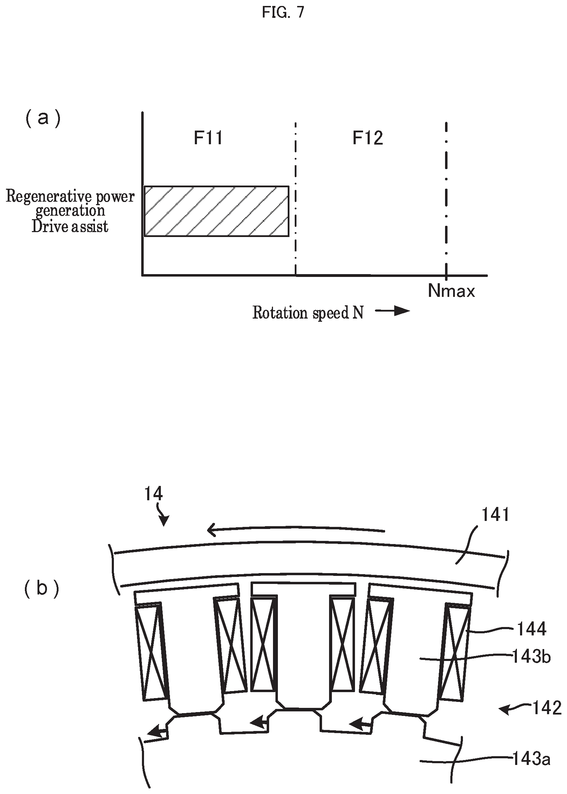

FIG. 7 is a diagram illustrating operation and configuration according to a sixth embodiment. Part (a) of FIG. 7 is a graph for explaining a control range. Part (b) of FIG. 7 is a partial cross-sectional view of a motor generator having a variable-L mechanism.

A motor generator 14 in the present embodiment has one of the following configurations (iii) and (iv).
(iii) As shown in Part (a) of FIG. 7, the motor generator 14 performs regenerative power generation and provides drive assistance in a rotation speed zone F11 that is less than or equal to half of the full rotation speed range of an engine 11 up to a maximum rotation speed Nmax.
(iv) As shown in Part (b) of FIG. 7, the motor generator 14 has a variable-L mechanism that allows inductance *L* of the motor generator 14 to be variable.

The configuration (iii) is, for example, implemented through a control unit 15 causing the motor generator 14 to perform regenerative power generation and provide drive assistance in the rotation speed zone F11 shown in Part (a) of FIG. 7.

Regarding the configuration (iv), Part (b) of FIG. 7 shows an enlarged partial cross-sectional view of the motor generator 14 having the variable-L mechanism. The motor generator 14 includes a rotor 141 having magnetic poles and a stator 142. Part (b) of FIG. 7 shows a motor generator of outer-rotor type as the motor generator 14.

The stator 142 has a core 143a, teeth 143b, and a winding 144. The winding 144 is wound around the teeth 143b. The core 143a and the teeth 143b form a magnetic path. The core 143a is rotatable in a rotational direction within an angular range corresponding to the width of the teeth 143b. For example, the magnetic resistance of the magnetic path through the winding 144 increases as the area of portions of the core 143a that face the teeth 143b decreases with the rotation of the core 143a relative to the teeth 143b. As a result, the inductance *L* of the winding 144 decreases. Conversely, the inductance *L* increases as the area of the portions that face the teeth 143b increases. As such, the inductance *L* is variable in the motor generator 14 shown in Part (b) of FIG. 7.

It should be noted that a motor generator of inner-rotor type or axial-gap type may adopt the variable-L mechanism.

Furthermore, the variable-L mechanism may adopt a configuration where an additional electrical terminal is provided at an intermediate point on the winding wound around a single tooth, and the effective number of winding turns is switched by switching the current supply between terminals, thereby varying the inductance L.

These are main differences from the first embodiment. The following mainly describes differences from the first embodiment. Elements common to the first embodiment are assigned the same reference signs as in the first embodiment, and description thereof is omitted.

Working of the configuration of the present embodiment is as follows.
(iii) Working of the configuration where the motor generator operates in the zone that is less than or equal to half of the rotation speed range of the engine:
   First, limiting the operating zone of the motor generator 14 to less than or equal to half of the rotation speed range of the engine 11 makes it possible to optimize the design of the motor generator 14. Since the motor generator 14 does not need to operate in a high rotation speed zone F12, this configuration allows for a reduction in the size and the weight of the motor generator 14, achieving a reduction in the weight of the leaning vehicle 10. This results in higher maneuverability of the leaning vehicle 10 and improved responsiveness during a turn or during transitions of the leaning posture.
   Limiting the operating zone also makes it possible to simplify control of the motor generator 14 and reduce the complexity of the control unit 15. This results in enhanced overall reliability of the hybrid system HV and contributes to cost reduction. Moreover, since the motor generator 14 does not operate in the high rotation speed zone F12, this configuration reduces issues of wear and heat generation resulting from high-speed rotation, providing higher durability for the motor generator 14 and related components.
(iv) Working of the configuration having the variable-L mechanism:
   Allowing the inductance L to be variable makes it possible to optimize the characteristics of the motor generator 14 according to driving conditions. Specifically, it is possible to achieve high torque by increasing the inductance *L* in the rotation speed zone F11, and to achieve higher efficiency by decreasing the inductance *L* in the high rotation speed zone F12. This optimizes the performance of the motor generator 14 over a wide rotation speed range and expands the applicable range. Additionally, allowing the inductance *L* to be variable makes it possible to prevent upsizing and maintain the light weight, eliminating the need to increase the size and the weight of the motor generator 14.

Furthermore, optimizing the inductance *L* makes it possible to achieve higher efficiency of the motor generator 14, reducing electric power loss. This enables effective use of electric power from the capacitor 16c, improving power efficiency. Furthermore, adjusting the inductance *L* makes it possible to control torque to be outputted from the motor generator 14 with high accuracy, enabling fine assistance and control of the behavior of the vehicle. This results in smoother assistance control for the pitch posture and transitions of the leaning posture, achieving a reduction in operational burden on the rider.

### Effects common to (iii) and (iv):

As described above, the configuration of the present embodiment, where the operating zone is limited or the inductance *L* is variable, allows for a reduction in the weight of the motor generator 14, resulting in higher maneuverability of the vehicle. Allowing the inductance *L* to be variable makes it possible to optimize the performance, enabling effective drive assistance and regenerative power generation over a wide rotation speed range, and thus expanding the applicable range. Furthermore, it is possible to achieve higher efficiency of the motor generator 14, enabling waste-free use of electric power from the capacitor 16c, and thus achieving an increase in power efficiency.

Additionally, limiting the operating zone and adjusting the inductance *L* simplify the control and enhance reliability of the hybrid system HV. This enables fine assistance and control of the behavior of the leaning vehicle 10, resulting in smoother assistance control for the pitch posture and transitions of the leaning posture, and achieving a reduction in operational burden on the rider. In particular, these effects are more prominent on the roads R1 and R2 with successive curves or successive uphill and downhill sections.

The features of the embodiments described above can be combined as desired. For example, the d-axis control in the third embodiment can be combined with the second embodiment where discharge power is provided to the motor generator at a voltage higher than the voltage that is supplied to the auxiliary machine of the engine. Furthermore, the motor generator that performs regenerative power generation and provides drive assistance in the low rotation speed zone in the fourth embodiment can be added to this combination. Furthermore, the control in the fifth embodiment to supply, to the motor generator, discharge power from the capacitor connected to the battery or discharge power from the capacitor that does not receive discharge power from the battery can be added to this combination. Furthermore, the regenerative power generation and the drive assistance in the rotation speed zone that is less than or equal to half of the full rotation speed range or the variable-L mechanism in the sixth embodiment can be added to this combination.

For another example, the motor generator that performs regenerative power generation and provides drive assistance in the low rotation speed zone in the fourth embodiment can be combined with the d-axis control in the third embodiment. Furthermore, the control in the fifth embodiment to supply, to the motor generator, discharge power from the capacitor connected to the battery or discharge power from the capacitor that does not receive discharge power from the battery can be added to this combination. Furthermore, the regenerative power generation and the drive assistance in the rotation speed zone that is less than or equal to half of the full rotation speed range or the variable-L mechanism in the sixth embodiment can be added to this combination.

For another example, the control in the fifth embodiment to supply, to the motor generator, discharge power from the capacitor connected to the battery or discharge power from the capacitor that does not receive discharge power from the battery can be combined with the motor generator that performs regenerative power generation and provides drive assistance in the low rotation speed zone in the fourth embodiment. Furthermore, the regenerative power generation and the drive assistance in the rotation speed zone that is less than or equal to half of the full rotation speed range or the variable-L mechanism in the sixth embodiment can be added to this combination.

For another example, the regenerative power generation and the drive assistance in the rotation speed zone that is less than or equal to half of the full rotation speed range or the variable-L mechanism in the sixth embodiment can be combined with the control in the fifth embodiment to supply, to the motor generator, discharge power from the capacitor connected to the battery or discharge power from the capacitor that does not receive discharge power from the battery.

### Reference Signs List

- 10: leaning vehicle
- 11: engine
- 11a: crankshaft
- 12a: rear drive wheel (drive wheel)
- 12b: front wheel
- 13: multi-stage transmission
- 14: motor generator (rotary electric machine)
- 15: control unit
- 16: power supply
- 16c: capacitor
- 17: front-wheel brake operating element
- 18: rear-wheel brake operating element
- 19: accelerator grip
- 21: auxiliary machine
- 22: battery
- 101: handlebar

## Claims

1. A multi-stage transmission-type leaning vehicle comprising:
a handlebar having an accelerator grip;
a front wheel;
a rear drive wheel;
a front-wheel brake operating element configured to adjust braking force of a brake for the front wheel;
a rear-wheel brake operating element configured to adjust braking force of a brake for the rear drive wheel;
an engine configured to generate power for driving the rear drive wheel;
a multi-stage transmission provided between the engine and the rear drive wheel;
a rotary electric machine provided at an end part of a crankshaft of the engine, and configured to perform regenerative power generation by receiving force from the rear drive wheel and provide drive assistance to the rear drive wheel;
a control unit configured to control the rotary electric machine; and
a power supply electrically connected to the rotary electric machine, wherein
the multi-stage transmission-type leaning vehicle is configured to satisfy the following (A) and (B) such that a weight increase of the leaning vehicle is suppressed and the power supply is capable of being charged and being discharged at high current within a short period of time,
(A) the rotary electric machine is a motor generator provided at the end part of the crankshaft of the engine and is configured as a sole rotary electric machine that performs regenerative power generation by receiving force from the rear drive wheel and that provides drive assistance to the rear drive wheel, and (B) the power supply is configured to include a capacitor without a lithium-ion battery pack where a plurality of cells are electrically connected in series and in parallel, wherein
the control unit executes, even when neither:
adjustment of the braking force through operation of the front-wheel brake operating element and the rear-wheel brake operating element, nor adjustment of driving force through gear shifting of the multi-stage transmission is performed; (C) a capacitor charge/discharge cycle for a combination of at least two successive curves A and B during travel on a successive-curve road and for a combination of at least two successive uphill and downhill sections C and D during travel on a successive-uphill-and-downhill road such that the vehicle speed of the leaning vehicle is adjusted, and assistance control is applied to a leaning posture and a pitch posture of the leaning vehicle through the regenerative power generation and the drive assistance by the motor generator, and
the capacitor charge/discharge cycle includes:
(a) acceleration control that is performed via the motor generator using discharge power from the capacitor in a latter half of the curve A so as to assist a transition from a leaning posture to an upright posture using the power from the engine, in accordance with input of an acceleration command to the accelerator grip;
(b) regenerative braking control that is performed via the motor generator to charge the capacitor through regenerative braking in a period until a latter half of the curve B so as to recover electric energy in the capacitor that has decreased due to the assistance for the transition from the leaning posture to the upright posture in the latter half of the curve A, in accordance with release of the acceleration command on the accelerator grip;
(c) acceleration control that is performed via the motor generator using discharge power from the capacitor in the uphill section C so as to supplement the power from the engine, in accordance with input of an acceleration command to the accelerator grip; and
(d) regenerative braking control that is performed via the motor generator to charge the capacitor through regenerative braking in the downhill section D so as to recover electric energy in the capacitor that has decreased due to the acceleration control in the uphill section C while reducing changes in pitch posture, in accordance with release of the acceleration command on the accelerator grip.

2. The multi-stage transmission-type leaning vehicle according to claim 1, wherein the power supply provides discharge power to the motor generator at a voltage higher than a voltage that is provided to an auxiliary machine of the engine.

3. The multi-stage transmission-type leaning vehicle according to claim 1 or 2, wherein the control unit executes d-axis control when causing the motor generator to assist driving with discharge power from the capacitor.

4. The multi-stage transmission-type leaning vehicle according to any one of claims 1 to 3, wherein the motor generator is configured to perform regenerative power generation and provide drive assistance at least in a low rotation speed zone among the following four rotation speed zones obtained by equally dividing a rotation speed range of the engine: a low rotation speed zone, a low-medium rotation speed zone, a medium-high rotation speed zone, and a high rotation speed zone.

5. The multi-stage transmission-type leaning vehicle according to any one of claims 1 to 4, wherein the power supply provides, to the motor generator, (i) discharge power from the capacitor electrically connected in series with a battery that provides electric power to an auxiliary machine of the engine; or (ii) discharge power from the capacitor configured not to receive discharge power from the battery that provides electric power to an auxiliary machine of the engine.

6. The multi-stage transmission-type leaning vehicle according to any one of claims 1 to 5, wherein (iii) the motor generator is configured to perform regenerative power generation and provide drive assistance in a rotation speed zone that is less than or equal to half of a full rotation speed range of the engine, or (iv) the motor generator has a variable-L mechanism that allows inductance *L* of the motor generator to be variable.
